(19) Europäisches Patentamt

European Patent Office

Office européen des brevets

(11) **EP 2 166 408 B1**

(12) # EUROPEAN PATENT SPECIFICATION

(45) Date of publication and mention
of the grant of the patent:
**12.03.2014 Bulletin 2014/11**

(51) Int Cl.:
***G03B 3/10*** *(2006.01)*      ***G03B 13/34*** *(2006.01)*
***G02B 7/36*** *(2006.01)*      ***H04N 5/232*** *(2006.01)*
***H04N 5/235*** *(2006.01)*

(21) Application number: **09252177.2**

(22) Date of filing: **14.09.2009**

(54) **Imaging device and imaging method using the same**

Bildgebungsvorrichtung und Bildgebungsverfahren, das diese Vorrichtung verwendet

Dispositif d'imagerie et procédé d'imagerie l'utilisant

(84) Designated Contracting States:
**AT BE BG CH CY CZ DE DK EE ES FI FR GB GR
HR HU IE IS IT LI LT LU LV MC MK MT NL NO PL
PT RO SE SI SK SM TR**

(30) Priority: **17.09.2008 JP 2008238757
17.09.2008 JP 2008237362**

(43) Date of publication of application:
**24.03.2010 Bulletin 2010/12**

(73) Proprietor: **Ricoh Company, Ltd.
Tokyo 143-8555 (JP)**

(72) Inventor: **Yoshida, Akihiro
Tokyo 143-8555 (JP)**

(74) Representative: **Leeming, John Gerard
J A Kemp
14 South Square
Gray's Inn
London WC1R 5JJ (GB)**

(56) References cited:
**JP-A- 7 318 785          JP-A- 2002 277 725
US-A1- 2005 212 950      US-A1- 2006 061 678
US-A1- 2008 192 139**

**Description**

Background of the Invention

The present invention relates to an imaging device such as a digital camera, particularly to an imaging device having a focus bracketing function in which images are continuously captured at plural in-focus positions at plural times, as well as to an imaging method using such an imaging device.

When a user shoots a subject with a depth in autofocus with an imaging device as a digital camera, falsely focused images which are in focus at a position the user has not intended to focus may be generated due to a limitation to hardware performance of the imaging device or an algorithm for a camera control system. For the purpose of preventing such out-of-focus images, there is an imaging device having a focus bracketing function in which upon a single operation to a shutter button, a series of images are captured at slightly shifted lens positions in a short period of time to store the images as image data. However, since in a general focus bracketing, an image is captured at about three times at the lens focus position and two positions slightly shifted forward or backward from the lens focus position, it is very difficult for the imaging device with such a general focus bracketing to deal with largely out-of-focus images.

Japanese Unexamined Patent Application Publication No. Hei 07-318785 (Reference 1) discloses a digital camera which measures distances to plural positions of a subject to perform focus bracketing at different lens focus positions according to the measured data. Further, Japanese Unexamined Patent Application Publication No. 2002-277725 (Reference 2) discloses a photographic method for focus control which controls exposure of a camera so that each of divided blocks of an image shows a predetermined level of brightness, generates a focus evaluation value in each block and regenerates a new focus evaluation value based on focus evaluation values in blocks in a predetermined focus range, so as to perform focus control based on the regenerated focus evaluation value.

From another point of view, there is a demand from users to capture a series of images at different lens focus positions without deciding which subject is to be focused and then compare the images and select the best one, especially when they like to shoot flowers at a short depth of field in tele-macro photographing, for example. For shooting flowers, in view of obtaining a better result, it is very difficult to determine before shooting which part of a flower, petals or pistils or stamens, is to be focused. Therefore, development of a more useful focus bracketing adapted to a wider focus range with in-focus position data of a subject taken into account has been requested in the market.

Meanwhile, the autofocus system of a digital camera or the like often adopts a focus determining system by a so-called "hill climb" method. In a general hill climb autofocus system, image data on a focal plane at each in-focus position obtained by the hill climb method is subjected to an arithmetic operation (Fourier transformation) to find spatial frequency data from the image data corresponding to each focal plane. Then, an integrated value of the spatial frequency data of some image areas is used for evaluation of a focus state. The larger the integrated value, the larger the size of a subject image in focus on the focal plane. However, since a curve of the integrated value relative to the lens position is gentle, when the integration of the spatial frequency data is performed on a large area as an entire image including a major subject with a high contrast and a relatively large size relative to the entire scene, the integrated value makes a relatively larger curve, which makes it difficult to find a peak of the curve relative to an arbitrary lens position and identify separate in-focus positions of plural subjects. Such a problem occurs specifically in shooting a subject long in a depth direction or two subjects in a close shooting distance.

Furthermore, from a commercial, manufactural point of view, there is always a limitation to the number of images captured in focus bracketing due to various factors including the capacitance of RAM (random access memory) to buffer captured image data. Since the capacitance of the RAM affects manufacturing costs, power consumption, packaging size or else of a camera, a commercially successful imaging device cannot be designed without taken it into consideration. Accordingly, there is an upper limit to the capacitance of the RAM. For example, an imaging device including a 10-million pixel image sensor and 1Gbit RAM can continuously capture about 7 images at maximum.

In addition, when the number of image to be able to capture in focus bracketing may vary depending on an available capacity of memory, it is difficult for a user to estimate a length of time from a full press to the shutter button to start a photographic operation to the end of continuous shooting in focus bracketing. This may cause a problem that the user cannot determine the right timing to operate in repeatedly shooting. In view of avoiding the problem, it is necessary to fixedly set the number of a series of images to capture in focus bracketing to a predetermined number.

Meanwhile, the focus bracketing disclosed in Reference 1, for example, is to move a lens position in a wide focus range thoroughly and dynamically. This is a good focus bracketing system but not the best system adaptable to various different scenes. That is, such a dynamically moving focus bracketing is suitable for capturing a scene including a person and buildings in the background while the above-described prior art focus bracketing to slightly shift a lens position is suitable for capturing a subject as flowers or small objects in close-up.

More specifically, for capturing the scene with a person in the front and buildings in the background, it is desirable to capture each of the person and the buildings in focus. On the contrary, for capturing flowers in close-up, it is desirable to minutely change focuses to capture petals of the front flower to those of the back flower with field of depth taken into account, but a ground in the background or the like is not needed to be in focus. This is because in capturing flowers or small objects in close-up, generally, it is assumed that a user intends to capture a main subject especially.

US 2006/0061678 A1 discloses an image pickup method in which when a shutter button is depressed, the focal position of a lens unit is continuously changed. An image pickup unit picks up a plurality of different images during this operation and stores them. The image are then displayed such that their specified focussed parts are displayed.

Disclosure of the Invention

An object of the present invention is to provide an imaging device which can capture a series of images at accurate in-focus positions in a wide focus range in focus bracketing in accordance with conditions of a subject to generate good images, as well as to provide an imaging method using such an imaging device.

According to the present invention, there is provided an imaging device and an imaging method as defined in the independent claims.

In the above imaging device, the control/arithmetic unit may compare the distribution function with a threshold to set the plurality of different in-focus positions based on a result of the comparison.

Further, in the above imaging device, the control/arithmetic unit compares the distribution function with a threshold and change the threshold based on a result of the comparison to set the plurality of different in-focus positions based on a result of a comparison between the distribution function and the changed threshold.

Further, in the above imaging device, the control/arithmetic unit may select in-focus positions on the distribution function being greater than the threshold as the plurality of different in-focus positions to set.

Further, in the above imaging device, the threshold may be set such that a smaller threshold is set to an in-focus position in a nearer distance.

In the above imaging device, the control/arithmetic unit may execute a processing to set, to a predetermined number, a number of a series of images to capture in response to a single shooting instruction from the operational unit.

Further, in the above imaging device, the threshold may be set to be a function which is a sum of a function of the in-focus positions and a constant term; and the control/arithmetic unit may set, to the predetermined number, the number of a series of images to capture in response to the single shooting instruction from the operational unit, by adjusting the constant term.

In the above imaging device, the control/arithmetic unit may set a number of times at which the constant term is adjusted to a predetermined number of times, determine the constant term to be either a constant term set at an end of the adjustment or a constant term one before the one set at the end of the adjustment so that the number of a series of images to capture is larger than the predetermined number, and preferentially determine, to be lens positions for shooting, the predetermined number of in-focus positions in a near distance from the in-focus positions on the distribution function being greater than the threshold.

Further, in the above imaging device, the control/arithmetic unit may end the adjustment of the constant term upon detecting an inversion of increase/decrease in the constant term, and determine the constant term to be either the constant term set at the end of the adjustment or the constant term one before the end of the adjustment so that the number of a series of images to capture is larger than the predetermined number, and preferentially determine, to be lens positions for shooting, the predetermined number of in-focus positions in a near distance.

In the above imaging device, when a focal length of the optical system is equal to or larger than a predetermined value and a predetermined number or more of in-focus positions are found in a nearer distance than a predetermined position from a result of comparison between the distribution function and a first threshold, the control/arithmetic unit may perform a first focus bracketing which is a focus bracketing in a narrow focus range; and when the focal length of the optical system is less than a predetermined value or a predetermined number or more of in-focus positions are not found in a nearer distance than the predetermined position from the result of comparison, the control/arithmetic unit may perform a second focus bracketing which is a focus bracketing in a wide focus range.

In the above imaging device, the first focus bracketing may be to select an in-focus position on the distribution function being greater than the first threshold and at a peak of the distribution in a near distance as well as in-focus positions preceding and succeeding the in-focus position based on the result of the comparison between the distribution function and the first threshold and to capture a series of images at the selected in-focus positions; and the second focus bracketing may be to select a plurality of different in-focus positions on the distribution function being greater than a second threshold based on a result of the comparison between the distribution function and the second threshold and to capture a series of images at the selected different in-focus positions.

Further, in the above imaging device, the first focus bracketing may be to integrate frequency components of all or some of the small areas, determine an in-focus position based on the integrated frequency components, and capture a series of images at the determined in-focus position and in-focus positions preceding and succeeding the determined in-focus position; and the second focus bracketing may be to select a plurality of different in-focus positions on the distribution function being greater than a second threshold based on a result of the comparison between the distribution function and the second threshold and to capture a series of images at the selected different in-focus positions.

In the above imaging device, the second threshold may be set to be a function which is a sum of a function of the in-focus positions and a constant term; and the control/arithmetic unit may set, to the predetermined number, the number of a series of images to capture in response to the single shooting instruction from the operational unit, by adjusting the constant term.

Advantageous Effect of the Invention

According to the present invention recited in the claims, the imaging device can reduce defective images as entirely out-of-focus images and unintended images with only a subject of less importance in focus as well as to increase good images with a subject of high importance in focus. Further, it is made possible to continuously capture a predetermined number of images at accurate in-focus positions in a wide distance range in a simple manner to generate good subject images in focus bracketing.

Furthermore, according to the present invention recited in the claims, the imaging device is configured to infer a close-up shot of flowers, small objects or else when the lens position is closer to a telephoto side than a predetermined focal length and a subject is in a nearer distance. It is also configured to provide two types of focus bracketing, a first focus bracketing to minutely move an in-focus position in a relatively narrow focus range and a second focus bracketing in a wide focus range. Accordingly, the imaging device can capture a series of images at accurate in-focus positions in a wide focus range to generate good subject images in focus bracketing. The method for setting lens focus position of the imaging device can be also realized.

Brief Description of the Drawings

FIG. 1 schematically shows the essential elements of an imaging device according to the present invention.

FIG. 2 is a flowchart for operation of an imaging device according to a first embodiment of the present invention.

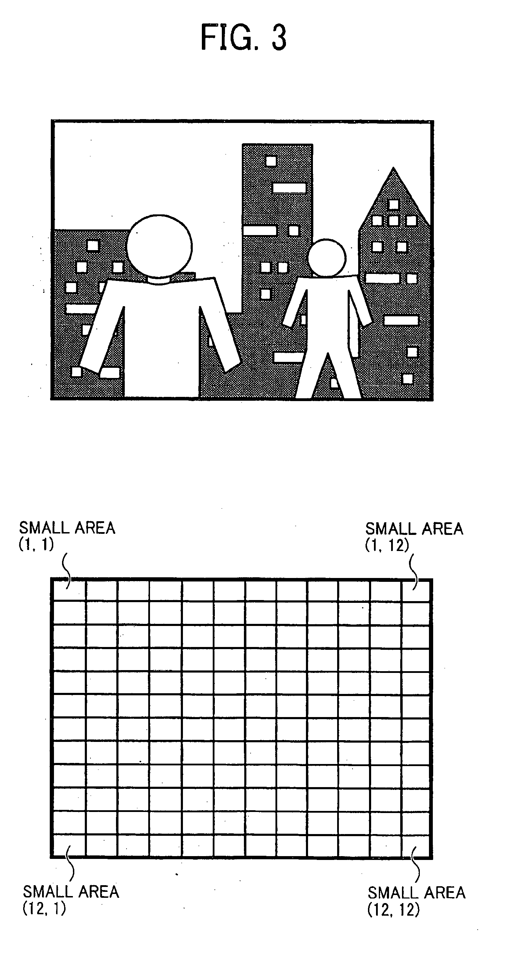

The upper drawing of FIG. 3 schematically shows an example of subjects and the lower drawing thereof shows divided areas of an image used for spatial frequency detection in order to describe how an in-focus position (x) is determined by a second focus bracketing according to first and second embodiments.

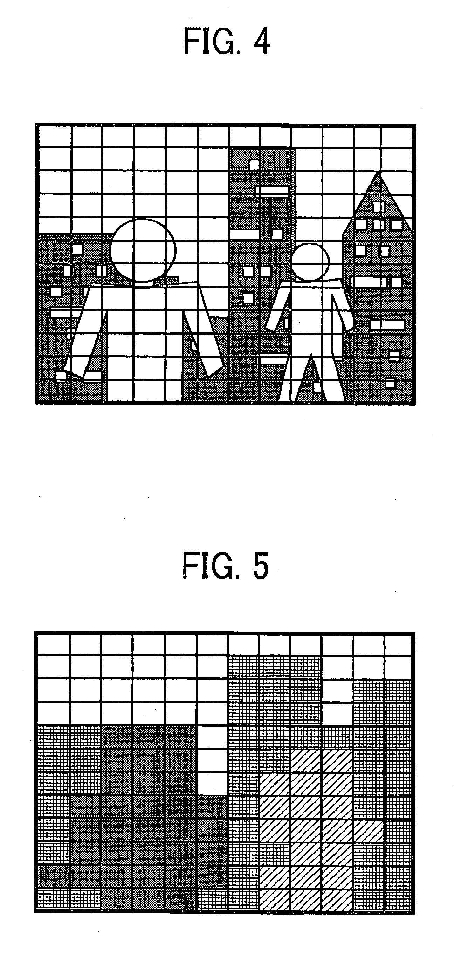

FIG. 4 is a schematic view of the subjects in the upper drawing of FIG. 3 and the small areas in the lower drawing thereof combined.

FIG. 5 is a view to describe an example of a focus state of the image in FIG. 4.

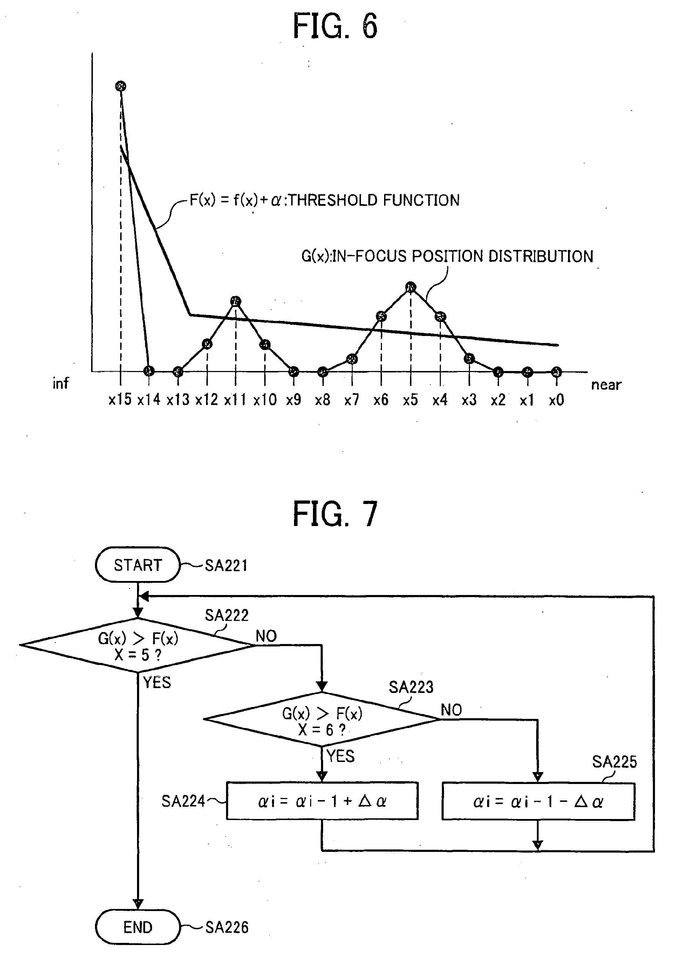

FIG. 6 is a graph showing a distribution function G(x) and a threshold function F(x) for determining an in-focus position (x) by the second focus bracketing according to the first and second embodiments.

FIG. 7 is a flowchart for detailed operation of the essential elements of the imaging device according to the first embodiment of the present invention.

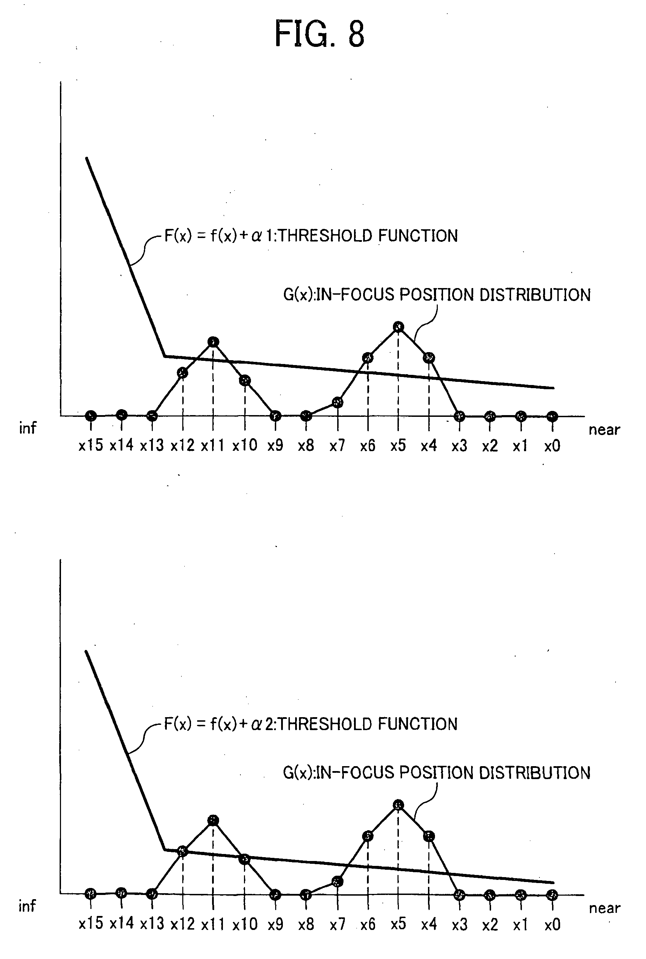

The upper drawing of FIG. 8 is a graph showing an example of a distribution function G(x) and a threshold function F(x) and the lower drawing thereof is a graph showing a shifted threshold function F(x) when the operation in FIG. 7 fails to properly determine the in-focus positions.

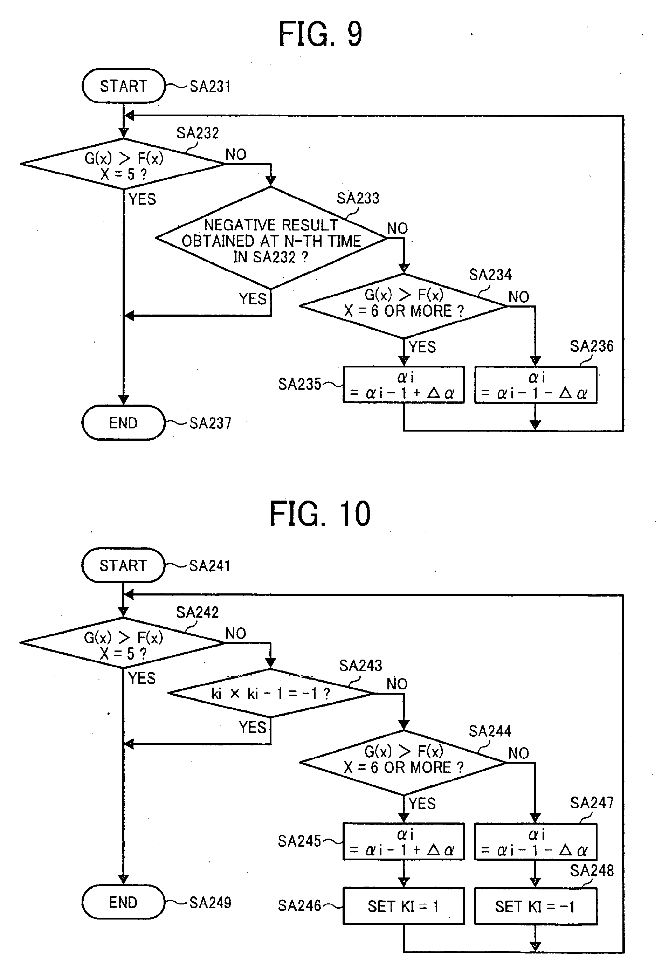

FIG. 9 is a flowchart for detailed operation of the essential elements of the imaging device according to the first embodiment of the present invention.

FIG. 10 is a flowchart for detailed operation of the essential elements of the imaging device according to the first embodiment of the present invention.

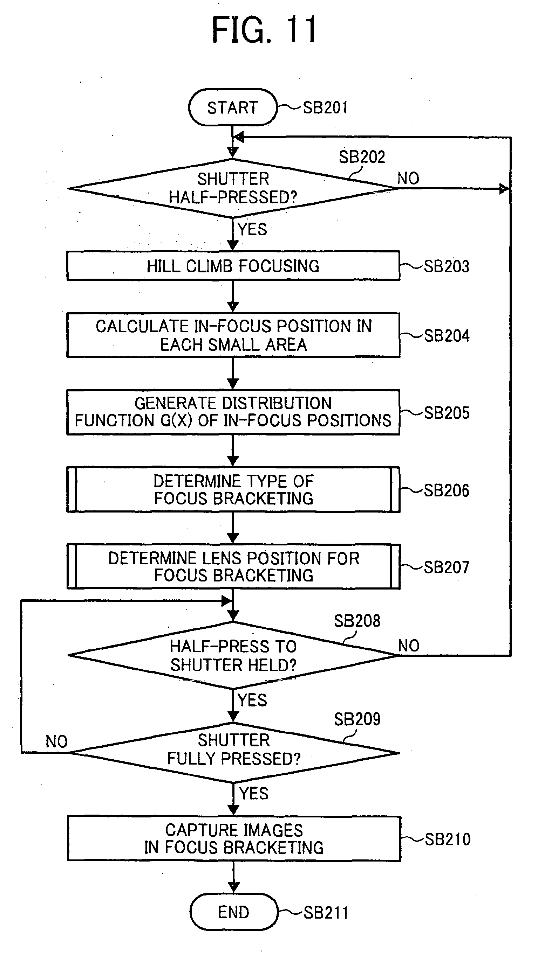

FIG. 11 is a flowchart for describing operation of focus bracketing according to the second embodiment of the present invention.

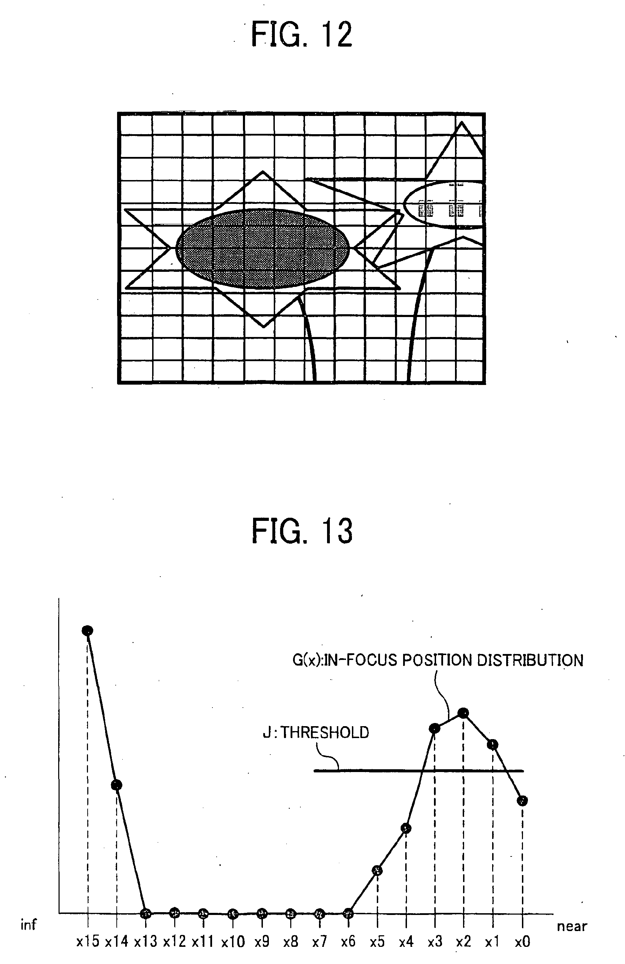

FIG. 12 is a combined view of subjects and divided areas for describing how an in-focus position (x) is determined by a first focus bracketing according to the second embodiment.

FIG. 13 is graph showing an example of a distribution function G (x) and a first threshold J for describing how an in-focus position (x) is determined by the first focus bracketing according to the second embodiment.

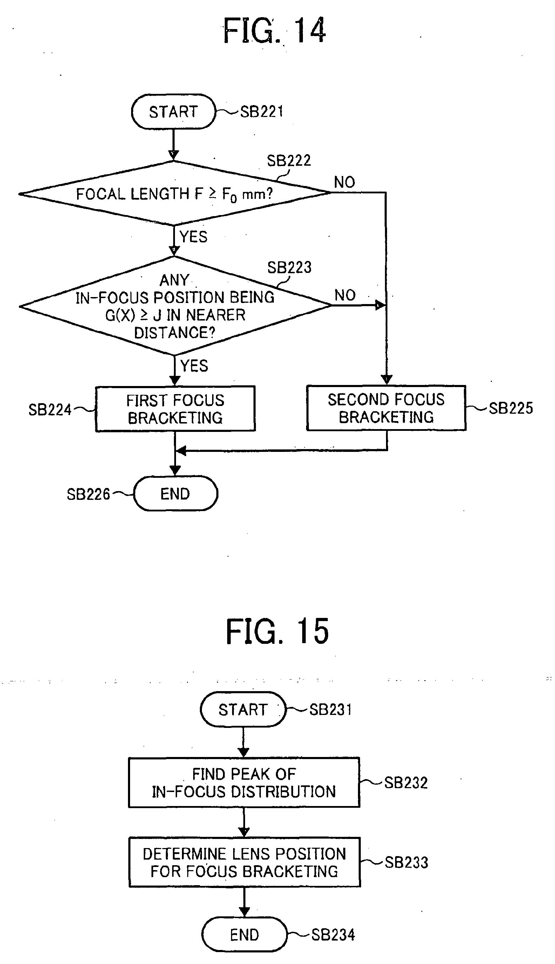

FIG. 14 is a flowchart for detailed operation for determining a type of focus bracketing according to the second embodiment of the present invention.

FIG. 15 is a flowchart for detailed operation for determining a lens position by the first focus bracketing according to the second embodiment of the present invention.

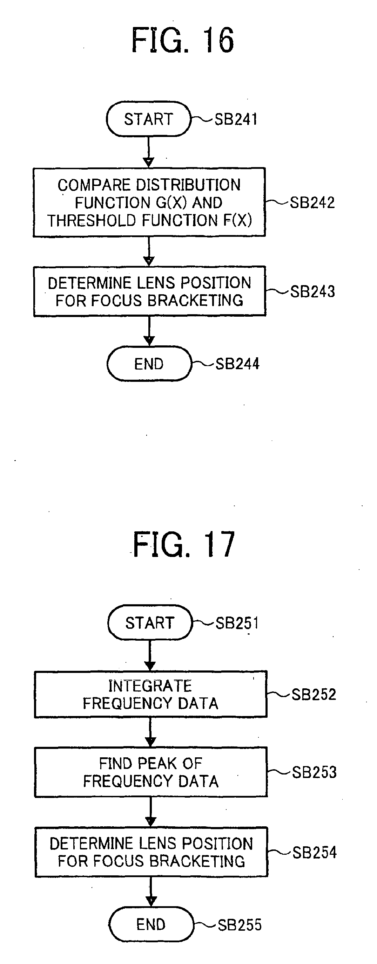

FIG. 16 is a flowchart for detailed operation for determining a lens position by a second focus bracketing according to the second embodiment of the present invention.

FIG. 17 is a flowchart for detailed operation for determining a lens position by a first focus bracketing according to a third embodiment of the present invention.

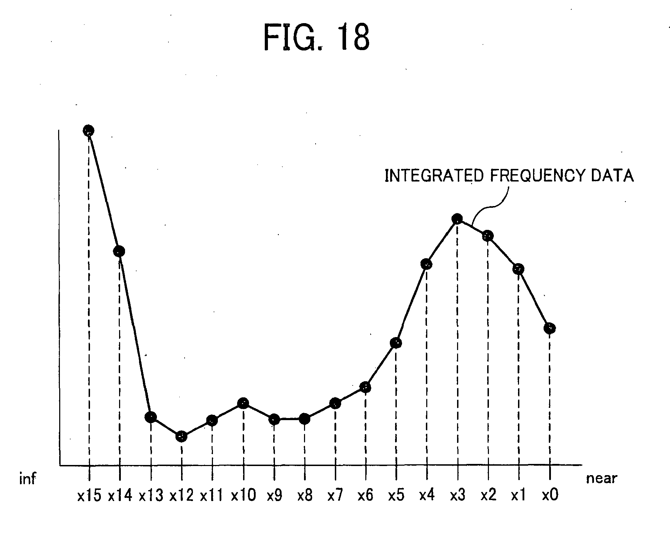

FIG. 18 is a graph showing integrated frequency data obtained by integrating frequency data in each divided area of the image in FIG. 12 by a hill climb method.

Mode for Carrying Out the Invention

Hereinafter, an imaging device according to embodiments of the present invention will be described in detail with reference to the accompanying drawings.

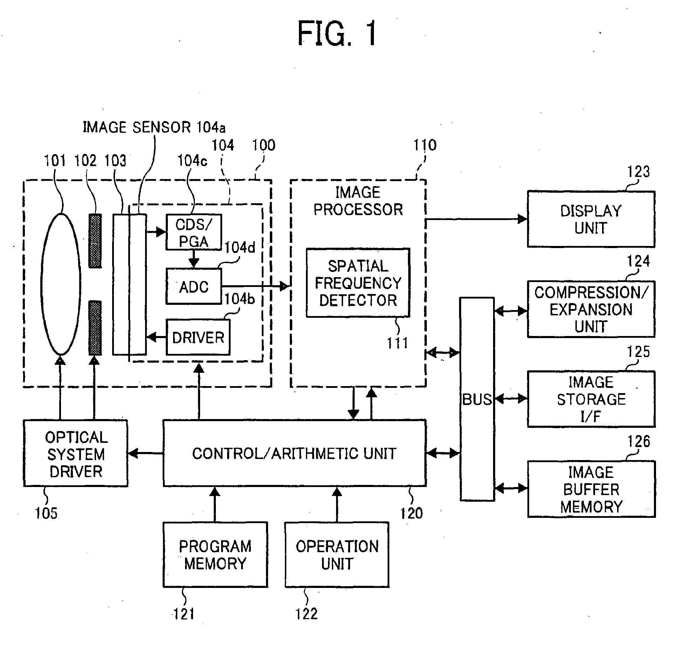

FIG. 1 schematically shows the essential elements of the imaging device according to first to third embodiments of the present invention. The imaging device in FIG. 1 comprises an optical unit 100, an optical system driver 111, an image processor 110, a control/arithmetic unit 120 (in-focus position calculator), a program memory 121, an operation unit 122, a display unit 123, a compression/expansion unit 124, an image storage interface (I/F) 125 and an image buffer memory 126.

The optical unit 100 comprises an imaging lens 101 (optical system), a diaphragm/shutter unit 102 (optical system), an optical low pass filter 103 and an imaging unit 104. In the embodiments of the present invention, a CMOS image sensor is used. The CMOS type image sensor is capable of high speed reading and therefore preferable to a CCD type image sensor for continuous shooting in a short period time with the focus bracketing according to the present invention.

The imaging unit 104 comprises an image sensor 104a, a driver 104b, a correlation double sampling (CDS)/ programmable gain amplifier (PGA) 104c, and an A/D converter (ADC) 104d.

The imaging lens 101 of the optical unit 100 constitutes a focus adjustable optical system which is able to mechanically, optically change an in-focus position in focusing, zooming, and boosting/stopping. The diaphragm/shutter unit 102 changes an aperture diaphragm in accordance with a condition of a subject and opens/closes a shutter for shooting still images. The optical system driver 111 drives the imaging lens 101 and the diaphragm/shutter unit 102. The control/arithmetic unit 120 instructs the optical system driver 111 to drive. In response to an instruction from the control/arithmetic unit 120, the optical system driver 111 operates the imaging lens 101 and the diaphragm/shutter unit 102. The imaging unit 104 converts an optical image of a subject formed with the imaging lens 101 of the optical unit 100 into electric charges on the image sensor 104a in which light-receiving elements are two-dimensionally arranged, to output an electric signal as image data in accordance with a read signal from the driver 104b. In the imaging unit 104 the outputs of the image sensor 104a are subjected to correlation double sampling and gain control in the CDS/PGA 104c and A/D conversion in the ADC 104d, and supplied to the image processor 110.

The signal output from the imaging unit 104 is processed by the image processor 110 to be image data in a predetermined format. The image data is written to and stored via the compression/expansion unit 124 and the image storage interface 125 in a storage medium using flash memories as an SD card, a compact flash card, an XD picture card (registered trademark). While the imaging device is in a preview mode, outputs from the imaging unit 104 are processed by the image processor 110 to be a display image and displayed on the display unit 123 as a preview image. The hill climb focusing and image display process can be in parallel or alternatively performed depending on the specification of the imaging device.

The image processor 110 has various functions and comprises a spatial frequency detector 111 for autofocus which obtains spatial frequency of image data of a subject acquired by hill climb focusing. The spatial frequency detector 111 includes a function to divide an image into small areas (area division function) and a function to detect a high frequency component in each small area (focus data acquiring function).

Further, the control/arithmetic unit 120 calculates an in-focus position according to detected high frequency component data and determines the in-focus position in focus bracketing based on a result of the calculation. In other words, various functions and elements are achieved by the control/arithmetic unit 120, and the focus bracket function is included in the control/arithmetic unit 120.

The operation unit 122 includes a shutter button of a two-level press type which distinctively detects a half-press (shutter half-pressed) and a full press (shutter fully pressed).

First Embodiment

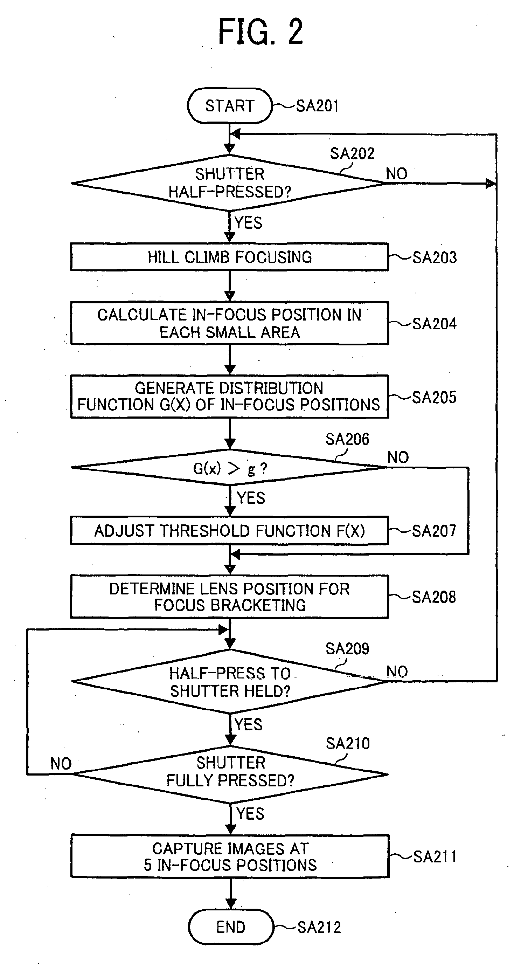

Next, referring to the flowchart in FIG. 2, control operation of the imaging device according to the present embodiment will be described. Herein, the number of images continuously captured in focus bracketing is set to be 5.

In step SA201 the process is started. In step SA202, a determination is made on whether or not the shutter button is in the half-press state, and if it is negative, the imaging device stands by until the shutter button is half-pressed. Upon detecting the half-press state of the shutter button (shutter half-pressed), the process proceeds to step SA203 and hill climb focusing is executed while the in-focus position (x) of the imaging lens 101 is changed. In step SA204, the spatial frequency detector 111 acquires spatial frequency data from each divided small area of image data of a plurality of subjects to calculate in-focus positions (x). The image data is obtained by the hill climb focusing. In step SA205 the number of small areas in focus for image data of each subject is calculated to obtain a distribution function G(x) of the in-focus positions (x). In step SA206 the distribution function G(x) and a threshold (g) is compared to determine on whether or not the distribution function G(x) is larger than the threshold (g). With the distribution function G(x) being larger than the threshold (g), it is able to appropriately determine the in-focus position (x) in step SA207 so that a threshold function g = F(x) is moved to determine a predetermined number of lens positions (5 in the present embodiment) for focus bracketing. On the other hand, with the distribution function G(x) being the threshold (g) or less, it means that the shooting condition is not good enough to acquire sufficient focus data, such as in a dark environment, to determine the in-focus position, so that the process skips the step SA207 and proceeds to step SA208. In step SA208 lens positions are determined to set the number of images to capture in focus bracketing to a predetermined number. Note that in the focus bracketing in step SA208, with the distribution function G(x) being the threshold (g) or less, the predetermined number of images are captured at different in-focus positions (x) with a preset interval, for example. Also, the lens positions refer to positions of a focus lens, for example.

FIG. 3 to FIG. 5 show examples of how to move the threshold function F(x) in step SA207. In step SA209, a determination is made as to whether or not the half-press to the shutter button is held, and if the result is positive, the process proceeds to step SA210 while if it is negative (half-press is released), it returns to SA202. In step SA210, a determination is made as to whether or not the shutter button is fully pressed, and if the result is positive, the process proceeds to step SA211 while if it is negative (half-press is held), it returns to SA209 and waits for the shutter button being fully pressed. In step SA211 images are captured in focus bracketing at the in-focus positions determined in step SA208. The process ends in step SA212

The upper drawing of FIG. 3 schematically shows an example of subjects captured in focus bracketing according to the present embodiment. The subjects are two persons in different shooting distance and high-rise buildings at infinite position. In the focus bracketing according to the present invention, the two persons and the high rise buildings are major subjects to be captured in focus. Also, the lower drawing of FIG. 3 shows an example of divided small areas for detection of spatial frequency, and image data is vertically and horizontally divided 12-by-12 into 144 small areas. The number of division is not particularly defined, however, it will be preferably $10 \times 10 = 100$ or more with distribution function (FIG. 6) taken into consideration.

FIG. 4 shows the subjects in the upper drawing of FIG. 3 and the small areas in the lower drawing thereof combined. FIG. 5 shows a result of the calculation of the in-focus position (x) in each small area of the above subjects of FIG. 4 while FIG. 6 shows an example of the distribution function G(x) of FIG. 5. In FIG. 5 a blackout area is determined in-focus areas of the front person corresponding to calculated in-focus positions (x) at lens positions x3 to x7 in FIG. 6. A dashed area is determined in-focus areas of the back person corresponding to calculated in-focus positions (x) at lens positions x6 to x12 in FIG. 6. A shaded area is determined in-focus areas of the high-rise buildings in the background corresponding to a calculated in-focus position (x) at a lens position x15 in FIG. 6. A white blank area is a sky in the background with no contrast; therefore, the in-focus position (x) thereof cannot be determined by hill climb focusing.

The distribution function G(x) represents frequency of distribution obtained by calculating the in-focus position (x) in each small area. x0 to x15 in the abscissa axis of the graph in FIG. 6 indicate in-focus positions (x) obtained by hill climb focusing, and in-focus positions (x) for focus bracketing is selected from these in-focus positions (x). However, this algorithm is adopted for better understanding of the present invention and a different algorithm can be adopted arbitrarily. For example, the in-focus positions (x) can be intentionally shifted in focus bracketing. The threshold function F(x) in FIG. 6 is a function f(x) + $\alpha$ connecting two primary functions and the threshold is variable by changing the constant term $\alpha$. The threshold function F(x) is set be an increasing function towards infinity (inf), that is, a smaller value for a nearer distance so that a subject in a nearer distance can be preferentially captured.

In FIG. 6, in-focus positions on the distribution function G(x) over the threshold function F(x) are set to be lens positions, for example. When the number of images captured in focus bracketing is five, the threshold function F(x) is shifted upward or downward in the graph of FIG. 6 to select five focus positions x4, x5, x6, x11 and x16 to be lens positions. In addition to the vertical shifting, the threshold function F(x) can be modified to be rotationally moved or changed in inclination in order to capture a predetermined number of images in focus bracketing. Further, in a case where a modified threshold function F(x) makes determining of the predetermined number of lens positions complicated, in-focus positions of over and close to the predetermined number can be obtained first to select the predetermined number of them from the near distance.

Next, with reference to the flowchart in FIG. 7, an example of the shifting of threshold function F(x) in step SA207 in FIG. 2 will be described. The process is started in step SA221. In step SA222 the distribution function G(x) and the threshold function F(x) are compared to determine on whether or not there are five in-focus positions (x) as G(x) > F(x). If the result is positive, the process ends in step SA226. Then, in step SA208 in FIG. 2, the five in-focus positions (x) are determined to be lens positions. And if the result is negative, the process proceeds to step SA223.

In step SA223, a determination is made on whether there are six or more in-focus positions (x) being G(x) > F(x). If the result is positive, the process proceeds to step SA224 while if it is negative, it proceeds to step SA225. In constant adjusting processing in step SA224, the threshold function F(x) is shifted by the following equation (1):

$$F(x) = f(x) + \alpha_{i\ -1} \rightarrow F(x) = f(x) + \alpha_i \ \text{ where } \alpha_i = \alpha_{i\ -1} + \Delta\alpha$$

This is because the threshold has to be increased for the purpose of reducing the number of in-focus position (x) as G (x) > F(x) to five. Then, the process returns to step SA222.

In the constant adjusting processing in step SA225, the threshold function F(x) is shifted by the following equation (2):

$$F(x) = f(x) + \alpha_{i\ -1} \rightarrow F(x) = f(x) + \alpha_i \ \text{ where } \alpha i = \alpha_{i\ -1} - \Delta\alpha$$

This is because with four or less in-focus positions (x) as G(x) > F(x), the threshold has to be decreased for the purpose of increasing the number of in-focus position (x) as G(x) > F(x) to five. Then, the process returns to step SA222. Thus, the five in-focus positions (x) for focus bracketing are determined by changing the threshold.

However, there still remains a case where the five in-focus positions on the distribution function G(x) being G (x) > F(x) cannot be determined by shifting the threshold function F(x) in any manner, as shown in FIG. 8. For example, from the distribution function G(x) and the threshold function F(x) in the graphs of FIG. 8, it is not possible to determine five in-focus positions (x). At the constant term $\alpha = \alpha2$ in the upper graph, frequencies of distribution at lens positions x10 and x12 are both on the threshold function F(x). Because of this, at $\alpha = \alpha1$ or $\alpha = \alpha2$, the number of in-focus positions. (x) over the threshold is four while at $\alpha$ = less than $\alpha2$, the number of in-focus positions (x) over the threshold is six. Accordingly, the number of in-focus position (x) determined through the processing in FIG. 7 will be always four or six and not five, so that the processing will be endlessly repeated. In order to determine the five in-focus positions (x) in such a case, a process shown in the flowchart of FIG. 9 will be performed.

The process is started in step SA231. In step SA232 the distribution function G(x) and the threshold function F(x) are compared with each other to determine on whether or not there are five in-focus positions (x) as G(x) > F(x). If it is negative, the process proceeds to step SA233, and the number of times at which the number of in-focus positions (x) are determined to be other than five is counted. Then, a determination is made on whether or not a counted value reaches a predetermined number of repetition times N. At the counted value coinciding with the value N, it is determined that the processing is being still repeated, and the process proceeds to step SA237 to enforcedly terminate the threshold adjusting processing. Finally, the process returns to step SA208 in FIG. 2 and five in-focus positions (x) in a nearer distance are preferentially selected from the above six in-focus positions to be lens positions.

When the counted value is not the predetermined value N in step SA233, in step SA234 a determination is made on whether or not there are six or more in-focus positions (x) as G(x) > F(x). If the result is positive, the process proceeds to step SA235 while if it is negative, it proceeds to step SA236. In the constant adjusting processing in step SA235 the threshold is shifted to rise and in step SA236 the threshold is shifted to decrease. Then, the process returns to step SA232. Thus, the five in-focus positions (x) for focus bracketing are determined.

Next, referring to the flowchart in FIG. 10, another example of determining the five in-focus positions (x) for focus bracketing from the graphs of the distribution function G(x) and threshold function F(x) in FIG. 8 will be described. In the processing in FIG. 10, a variable k is additionally used. The variable k is set in accordance with a result of the determination on whether or not the number of in-focus positions (x) is 6 or more in step SA244 (steps SA246, 248). This is because in FIG. 7, the determination on the number of in-focus positions (x) in step SA223 is repeated until a positive result is acquired. That is, the result of the determination is reversed before and after the positive result is acquired. Moreover, with use of the variable k and addition of calculation of ($k_i \times k_{i-1}$ = -1) and determination on a result of the calculation (step SA243), the reverse of the determination result in step SA244 can be detected to enforcedly terminate the adjustment of the constant $\alpha$ of the threshold function F(x).

In FIG. 10, the process is started in step SA241. In step SA242 the distribution function G(x) and the threshold function F(x) are compared with each other to determine on whether or not there are five in-focus positions (x) being G (x) > F(x). If the result is negative, the process proceeds to step SA243 and a determination is made on whether or not $k_i \times k_{i-1}$ = -1. If it is negative, the process proceeds to step SA244. If it is positive, upon determining that the processing in step SA223 is still repeated, it proceeds to step SA249 to enforcedly terminate the threshold adjustment. Then, returning to step SA208 in FIG. 2, five in-focus positions in a nearer distance are preferentially selected as lens positions from the above six in-focus positions. In step SA244 a determination is made on whether or not there are six or more in-focus positions (x) being G(x) > F(x). If the result is positive, the process proceeds to step SA245 and if it is negative, it proceeds to step SA247. In step SA245, the threshold is shifted upward, $k_i$ = 1 is set in step SA246, and the process returns to step SA242. Meanwhile, in step SA247 the threshold is shifted downward, $k_i$= -1 is set in step SA248, and the process returns to step SA242.

As described above, it is possible to reduce the number of defective images or unintended images such as entirely out-of-focus images or images with only a minor subject being in focus and to increase the number of image with a major subject in focus. Further, it is made possible to easily set the number of images to capture in focus bracketing to a fixed number. Moreover, it is made possible to preferentially capture a subject in a nearer distance in focus in focus bracketing as well as to capture a background in focus when needed.

Second Embodiment

With reference to the flowchart in FIG. 11, control operation for focus bracketing according to the second embodiment of the present invention will be described. The control operation according to the second embodiment differs from that according to the first embodiment shown in FIG. 2 only in step SB206. Steps SA201 to SA205 in FIG. 2 correspond to steps SB201 to SB205 in FIG. 11, and step SA208 to SA212 in FIG. 2 correspond to steps SB207 to SB211 in FIG. 11. Therefore, only the process in step SB206 will be described.

In Step SB206 a type of focus bracketing, first or second to be performed is determined. How to determine a type of focus bracketing in step SB206 will be later described in detail (FIG. 14). In step SB207 lens positions at which a predetermined number of images are captured are determined in accordance with a selected type of focus bracketing. Process in step SB207 will be also described later in detail (FIG. 14 and FIG. 15).

FIG. 12 schematically shows another example of an image of a subject in focus bracketing according to the second embodiment. The image is divided into small areas for detecting high frequency components by the spatial frequency detector 111, as in the lower drawing of FIG. 3. In this example the subject is two flowers in close-up. The image is assumed to be captured in a relatively short shooting distance with a telephoto lens (focal length $f \geq f_0$ mm), and the petals, stamens and pistils of the front flower and the petals of the back flower are in a close distance but they are on different focal planes.

FIG. 13 shows an example of distribution function G(x) obtained in step SB205 for the subject in FIG. 12. In-focus positions (x) in each small area are calculated in step SB204 from data obtained by hill climb focusing in step SB203. In FIG. 13, x0 to x15 in the abscissa axis indicate in-focus positions (x) obtained by hill climb focusing, and x0 to x5 correspond to in-focus positions (x) of the two flowers and x13 to x15 correspond to those of the background.

FIG. 14 shows a sub flowchart of the step SB206 in FIG. 11 describing a process to determine a type of focus bracketing, as a way of example. The process is started in step SB221, and in step SB222 after detection of a half-press to the shutter button (shutter half-pressed), a determination is made on whether or not a telephoto lens is used, that is, a focal length f is a predetermined $f_0$ mm or more ($f \geq f_0$ mm). In this example, the imaging lens 101 is an adjustable lens such as a zoom lens, however, the present invention is not limited thereto. The lens 101 can be one whose focal length is selectively changed among a plurality of focal lengths or it can be replaced by another lens to change the focal length as long as the control system can recognize a selected focal length f through an appropriate element.

With the focal length f determined to be $f_0$ mm or more, the process proceeds to step SB223 while with the focal length f determined to be less than $f_0$ mm, the process proceeds to step SB225. In SB223 a determination is made on whether or not there is a value of distribution function G(x) exceeding a first threshold J in the range of lens positions x0 to x7. If the result is positive, the process proceeds to step SB224 while if it is negative, it proceeds to step SB225. In step SB224, that is, with positive results obtained in steps SB222 and SB223, a first focus bracketing in a relatively narrow range is selected and the process proceeds to step SB226. In step SB225, that is, with a negative result obtained in at least one of steps SB222 and SB223, a second focus bracketing in a wide range is selected. The process ends in step SB226, and returns to step SB207 in which lens positions for focus bracketing are determined. Note that the first threshold J is set to include a relatively near distance area (lens positions x0 to x7, for example).

The process in step SB207 of FIG. 11 differs depending on which of the first and second focus bracketings is selected in step SB206 of FIG. 14. First, an example of lens positioning in the first focus bracketing will be described with reference to the sub flowchart in FIG. 15. A process to determine lens positions is started in step SB231. In step SB232 a peak position of the distribution function in the range of lens positions x0 to x7 in FIG. 13 is found. In step SB233 a predetermined number of in-focus positions (x) including the peak position determined in step SB232 and positions preceding and succeeding the peak position are determined to be lens positions. The process ends in step SB234. Then, the process returns to steps SB208 and SB209 and in focus bracketing in step SB210 of FIG. 11, an image is captured at the lens positions determined in step SB233.

Next, an example of lens positioning in step SB207 of FIG. 14 in the second focus bracketing will be described with reference to the sub flowchart in FIG. 16. A process to determine lens positions is started in step SB241. In step SB242 the distribution function G(x) and the threshold function F(x) (second threshold g) in FIG. 6 are compared with each other. In step SB243 a predetermined number of in-focus positions (x) are selected from in-focus positions (x) on the distribution function G(x) being over the threshold function F(x) to be lens positions. The process ends in step SB244. Then, the process returns to steps SB208 and SB209 and in focus bracketing in step SB210 of FIG. 11, an image is captured at the lens positions determined in step SB243. Note that in step SB243 the lens positions can be determined by shifting the threshold function (x) upward or downward in the graph of FIG. 6 and select a predetermined number (5 in the first embodiment) of in-focus positions being over the threshold function F(x) as in the first embodiment.

As described above, the first focus bracketing is selected in step SB224 when the focal length f of the imaging lens 101 is determined to be $f_0$ mm or more (telephoto) in step SB222 of FIG. 14 and the distribution function G(x) in the range of lens positions x0 to x7 in FIG. 13 is determined to include the in-focus position (x) being the first threshold J or more in step SB223. In the first focus bracketing in FIG. 15, the peak position of the distribution function G(x) is found in the range of lens positions x0 to x7 in FIG. 13 in step SB232, and a predetermined number of in-focus positions (x) including the peak position found in step SB232 and positions preceding and succeeding the peak position are determined to be lens positions in step SB233. That is, in FIG. 13 the peak position x2 is determined and the in-focus positions (x) including the peak position x2 and each two preceding and succeeding positions, i.e., x0, x1, x2, x3, x4, are determined to be 5 lens positions.

Further, the second focus bracketing is selected in step SB225 of FIG. 14 when the focal length f of the imaging lens 101 is determined to be not $f_0$ mm or more or when it is determined to be $f_0$ mm or more but the distribution function G(x) in the range of lens positions x0 to x7 in FIG. 13 is determined not to include any in-focus position (x) being the first threshold J or more in step SB223. In the second focus bracketing in FIG. 16, the distribution function G(x) and the threshold function F(x) (second threshold g) in FIG. 6 are compared with each other in step SB242 to determine lens positions based on a result of the comparison in step SB243.

Thus, for imaging the flowers shown in FIG. 12 in the first focus bracketing according to the present embodiment, the main components of the flowers from the front flower to the back flower are each brought into focus to capture an image of them. Also, for imaging the scene shown in FIG. 4 in the second focus bracketing according to the present embodiment, the two persons and the high-rise buildings are determined to be major subjects and each of them are brought into focus.

Third Embodiment

Next, an imaging device according to the third embodiment will be described. The imaging device according to the present embodiment has main components similar to those of the imaging device shown in FIG. 1 as in the first and second embodiments. The difference in the focus bracketing according to the present embodiment from that in the second embodiment is only in lens positioning for focus bracketing in step SB207 of FIG. 11 when the first focus bracketing is selected in step SB224 of FIG. 14. The lens positioning according to the third embodiment is performed based on the sub flowchart in FIG. 17. The rest of the focus bracket processing is the same as that in the second embodiment.

The process in step SB207 of FIG. 11 differs depending on which of the first and second focus bracketings is selected in step SB206 of FIG. 14. An example of lens positioning in the first focus bracketing will be described with reference to the sub flowchart in FIG. 17. First, a process is started in step SB251. In step SB252 the frequency data of each small area of the subject in FIG. 12 obtained by hill climb focusing in step SB203 of FIG. 11 is integrated to acquire integrated frequency data as shown in FIG. 18. The small areas as a subject of the frequency integration in step SB252 can be all the 144 areas of the image data in the lower drawing of FIG. 3 or they can be a part thereof, about 36 areas ($6 \times 6$) in the center of the image data, for example. Alternatively, the number of areas can be arbitrarily set to form appropriate patterns in accordance with a shooting condition or a subject condition. In step SB253 a peak of the frequency data is found from the range of lens positions x0 to x7 in a relatively near distance, for example. In step SB254 a predetermined number of in-focus positions (x) including the peak found in step SB253 and positions preceding and succeeding the peak are determined to be lens position. The process ends in step SB255.

Then, the processing returns to steps SB208 and SB209 in FIG. 11, and in step SB210 an image is captured at the lens positions determined in step SB254. When the second focus bracketing is selected in step SB206 of FIG. 11, lens positions are determined following the sub flowchart of FIG. 16 as in the second embodiment. In the first focus bracketing according to the present embodiment, a peak of the frequency data is found from the range of lens positions x0 to x7 in step SB253. Then, in step SB254 a predetermined number of in-focus positions (x) including the peak position found in step SB253 and positions preceding and succeeding the peak position are determined to be lens position. That is, the peak position x3 in the range of the lens positions x0 to x7 is determined from the integrated frequency data in FIG. 18, and in-focus positions (x), x1, x2, x3, x4, x5, which are the peak position and each two preceding and succeeding positions are determined to be five lens positions.

Note that the peak of the integrated frequency data is at x3 in FIG. 18 while that of the distribution function is at x2 in FIG. 13. This is due to a difference in accuracy for determining in-focus positions between in individual small areas and in an integrated area. The difference occurs for the following reasons. In the second embodiment, the first focus bracketing is determined based on the focal length and the first threshold, and the lens positions are determined by a relatively simple algorithm using the distribution function. In other words, an example of the distribution function in FIG. 13 is used for determining both of the type of focus bracketing and the lens positions. On the other hand, in the third embodiment new frequency data is calculated to determine the lens positions. The new frequency data is found by extracting high frequency components from each small area and integrating the extracted high frequency components.

Calculating the in-focus position (x) in each small area is an efficient algorithm for realizing the second focus bracketing but not necessarily suitable for the first focus bracketing. In the first focus bracketing, frequency data can be obtained in a relatively large image area by the prior art autofocus system. There are shortcomings in the hill climb focusing in small areas in terms of focus accuracy when a subject is of low contrast or when camera shake occurs. The subject of low contrast is one captured under a dark illumination and whose contrast is not sufficiently recognizable, one including a flat surface or the like. The smaller each area for detection of the spatial frequency, the smaller the output of the frequency data, which makes it difficult to accurately determine the in-focus position (x).

Further, when camera shake occurs during autofocus, it is not able to obtain accurate frequency data. For example, assumed that the camera shake during autofocus causes a shift of divided small areas from the actual image data by one small area, frequency data obtained will be not of the area in question but of its adjacent area. Accordingly, it is not able to determine an accurate in-focus position (x). And, the smaller the area for detection of spatial frequency, the more unsusceptible the frequency data is to the camera shake.

With the above taken into consideration, aiming for improving the focus accuracy, the first focus bracketing is configured to determine the in-focus position (x) in the center of the image data based on a result of the integration of the frequency data.

Further, when the focal length f of the imaging lens 101 is not determined to be a predetermined focal length $f_0$ mm or more in step SB222 of FIG. 14, or when the focal length f of the imaging lens 101 is determined to be a predetermined focal length $f_0$ mm or more but the distribution function G(x) in the range of lens positions x0 to x7 in FIG. 13 is determined not to include the in-focus position (x) being the first threshold J or more in step SB223, the second focus bracketing is selected in step SB225 in the third embodiment as in the second embodiment. Also, as in the second embodiment, in the second focus bracketing, the distribution function G(x) and the threshold function F(x) as a second threshold shown in FIG. 6 are compared with each other in step SB242 in FIG. 16 to determine lens positions based on a result of the comparison in step SB243.

As described above, in the first focus bracketing according to the third embodiment, each of the main components of the front and back flowers in FIG. 12 can be captured in focus. Further, in the second focus bracketing, the two persons and the high-rise buildings in FIG. 4 are determined to be major subjects and each of them can be captured in focus, as in the second embodiment.

As described above, the imaging device according to the present invention can focus a plurality of subjects in a captured angle of view (range) in the focus bracketing by dynamically (in a wide focus range) moving the lens positions based on information obtained by hill climb focusing in each small image area. Accordingly, it is possible to reduce a possibility to generate entirely out-of-focus images unlike the prior art focus bracketing. Moreover, the first focus bracketing is selected to determine the in-focus position (x) of a main subject by integrating frequency components of plural small areas, when a subject is captured under a shooting condition such as a short depth of field which has been determined from the lens focal length determination and the determination on the in-focus position in a nearer distance. This makes it possible to avoid a decrease in the focus accuracy due to occurrence of low contrast or camera shake which is the disadvantage of the focus bracketing to determine the in-focus position in each small image area, and properly determine the in-focus position (x) (peak position) of the main subject in the focus bracketing. Further, the main subject is captured at plural in-focus positions (x) including the peak position and preceding and succeeding positions to the peak position. Therefore, the imaging device can also realize focus bracketing to minutely move the focus in a relatively small range. In other words, the imaging device according to the present invention can automatically select an appropriate focus bracketing by a simple algorithm in accordance with a shooting condition to capture an image a user intends to capture.

Although the present invention has been described in terms of exemplary embodiments, it is not limited thereto. It should be appreciated that variations may be made in the embodiments described by persons skilled in the art without departing from the scope of the present invention as defined by the following claims.

**Claims**

1. An imaging device comprising:

   an optical system for imaging (101);
   an image sensor (104a) which converts an optical image of a subject formed by the optical system (101) into an electric signal for output as image data;
   an image processor (110) which processes image data output from the image sensor (104a) and comprises a spatial frequency detector (111) which detects a spatial frequency of the image data;
   an optical system driver (105) which sets an in-focus position (x) of the optical system (101); rand
   a control/arithmetic unit (120) which controls the optical system driver (105) according to information detected by the spatial frequency detector (111); and

an operation unit (122) which gives an instruction to capture an image, wherein

the spatial frequency detector (111) comprises an area dividing function in which the image data is divided into a plurality of small areas for detection of the spatial frequency, and a focus data acquiring function in which a predetermined frequency component is detected from each of the small areas, the frequency component indicating a focus state of an image in each of the small areas; and

the control/arithmetic unit (120) calculates an in-focus position (x) of each of the small areas based on the frequency component detected by the focus data acquiring function, calculates; based on the calculated in-focus position in each of the small areas, a number of small areas which are in focus at respective in-focus positions (x) to obtain a distribution function (G(x)) of the in-focus positions (x), and sets a plurality of different in-focus positions (x) based on the distribution function (G(x));

**characterised in that**:

the imaging device captures a series of images at the plurality of different in-focus positions (x) set by the control/arithmetic unit (120) based on the information detected by the spatial frequency detector (111), in response to the instruction to capture an image from the operation unit; and

the control/arithmetic unit (120) compares the distribution function (G (x)) with a threshold (g) and changes the threshold (g) based on a result of the comparison to set the plurality of different in-focus positions (x) based on a result of a comparison between the distribution function (G (x)) and the changed threshold (g).

2. The imaging device according to claim 1, wherein
the control/arithmetic unit (120) compares the distribution function (G(x)) with a threshold (g) to set the plurality of different in-focus positions (x) based on a result of the comparison.

3. The imaging device according to claim 1 or 2, wherein
the control/arithmetic unit (120) selects in-focus positions (x) on the distribution function (G(x)) being greater than the threshold (g) as the plurality of different in-focus positions to set.

4. The imaging device according to any one of claims 1 to 3, wherein
the threshold (g) is set such that a smaller threshold is set to an in-focus position in a nearer distance.

5. The imaging device according to one of claims 1 to 4, wherein
the control/arithmetic unit (120) executes a processing to set, to a predetermined number, a number of the series of images to capture in response to the instruction to capture an image from the operation unit (122).

6. The imaging device according to claim 5, wherein:

the threshold (g) is set to be a function (F(x)) which is a sum of a function (f(x)) of the in-focus positions (x) and a constant term ($\alpha$); and

the control/arithmetic unit (120) sets, to the predetermined number, the number of a series of images to capture in response to the instruction to capture an image from the operation unit (122), by adjusting the constant term ($\alpha$).

7. The imaging device according to claim 6, wherein:

the control/arithmetic unit (120) sets a number of times at which the constant term ($\alpha$) is adjusted to a predetermined number of times (N), determines the constant term ($\alpha$) to be either a constant term ($\alpha$) set at an end of the adjustment or a constant term ($\alpha$) one before the one set at the end of the adjustment so that the number of the series of images to capture is larger than the predetermined number, and preferentially determines, to be lens positions for shooting, the predetermined number of in-focus positions (x) in a near distance from the in-focus positions (x) on the distribution function (G (x)) being greater than the threshold (g).

8. The imaging device according to claim 7, wherein
the control/arithmetic unit (120) ends the adjustment of the constant term ($\alpha$) upon detecting an inversion of increase/decrease in the constant term ($\alpha$), and determines the constant term ($\alpha$) to be either the constant term ($\alpha$) set at the end of the adjustment or the constant term ($\alpha$) one before the end of the adjustment so that the number of the series of images to capture is larger than the predetermined number, and preferentially determines, to be lens positions for shooting, the predetermined number of in-focus positions (x) in a near distance.

9. The imaging device according to one of claims 3 to 8, wherein:

when a focal length (f) of the optical system (101) is equal to or larger than a predetermined value ($f_0$) and a predetermined number or more of in-focus positions (x) are found in a nearer distance than a predetermined position from a result of comparison between the distribution function (G (x)) and a first threshold (J), the control/arithmetic unit (120) performs a first focus bracketing which is a focus bracketing in a narrow focus range; and when the focal length (f) of the optical system (101) is less than a predetermined value ($f_0$) or a predetermined number or more of in-focus positions (x) are not found in a nearer distance than the predetermined position from the result of comparison, the control/arithmetic unit (120) performs a second focus bracketing which is a focus bracketing in a wide focus range.

10. The imaging device according to claim 9, wherein:

the first focus bracketing is to select an in-focus position (x) on the distribution function (G(x)) being greater than the first threshold (J) and at a peak of the distribution in a near distance as well as in-focus positions (x) preceding and succeeding the in-focus position based on the result of the comparison between the distribution function (G(x)) and the first threshold (J) and to capture a series of images at the selected in-focus positions (x); and
the second focus bracketing is to select a plurality of different in-focus positions on the distribution function (G (x)) being greater than a second threshold (g) based on a result of the comparison between the distribution function (G(x)) and the second threshold (g) and to capture a series of images at the selected different in-focus positions.

11. The imaging device according to claim 9, wherein:

the first focus bracketing is to integrate frequency components of all or some of the small areas, determine an in-focus position based on the integrated frequency components, and capture a series of images at the determined in-focus position (x) and in-focus positions (x) preceding and succeeding the determined in-focus position (x); and
the second focus bracketing is to select a plurality of different in-focus positions on the distribution function (G (x)) being greater than a second threshold (g) based on a result of the comparison between the distribution function (G(x)) and the second threshold (g) and to capture a series of images at the selected different in-focus positions (x).

12. The imaging device according to claim 11, wherein:

the second threshold (g) is set to be a function (F(x)) which is a sum of a function (f(x)) of the in-focus positions (x) and a constant term ($\alpha$); and
the control/arithmetic unit (120) sets, to the predetermined number, the number of the series of images to capture in response to the instruction to capture an image from the operational unit (122), by adjusting the constant term ($\alpha$).

13. An imaging method using an imaging device which comprises an optical system for imaging (101); an image sensor (104a) which converts an optical image of a subject formed by the optical system (101) into an electric signal for output as image data; an image processor (110) which processes image data output from the image sensor (104a) and comprises a spatial frequency detector (111) which detects a spatial frequency of the image data; an optical system driver (111) which sets an in-focus position (x) of the optical system (101); and a control/arithmetic unit (120) which controls the optical system driver (111) according to information detected by the spatial frequency detector (111); and an operation unit (122) which gives an instruction to capture an image, the method comprising the steps of:

dividing the image data into a plurality of small areas for detection of the spatial frequency;
detecting a predetermined frequency component indicating a focus state of an image from each of the small areas;
calculating an in-focus position (x) of each of the small areas based on the frequency component detected;
obtaining a distribution function (G(x)) of the in-focus positions (x) by calculating a number of small areas which are in focus at respective in-focus positions (x) based on the calculated in-focus position of each of the small areas; and
setting the plurality of different in-focus positions (x) based on the distribution function (G(x));

**characterised in that** the method comprises the steps of:

comparing the distribution function (G(x)) with a threshold (g); and
changing the threshold (g) based on a result of the comparison to set the in-focus positions (x) based on a result of a comparison between the distribution function (G(x)) and the changed threshold (g).

**Patentansprüche**

1. Abbildungsvorrichtung, die umfasst:

ein optisches System zum Abbilden (101);
einen Bildsensor (1 04a), der ein durch das optische System (101) erzeugtes optisches Bild eines Gegenstands in ein elektrisches Signal für die Ausgabe als Bilddaten umsetzt;
einen Bildprozessor (110), der die Bilddatenausgabe von dem Bildsensor (104a) verarbeitet und einen Detektor (111) für räumliche Frequenz umfasst, der eine räumliche Frequenz der Bilddaten detektiert;
eine Antriebsvorrichtung des optischen Systems (105), die eine Scharfstellungsposition (x) des optischen Systems (101) einstellt; und
eine Steuer-/Recheneinheit (120), die die Antriebsvorrichtung des optischen Systems (105) gemäß den durch den Detektor (111) für räumliche Frequenz detektierten Informationen steuert; und
eine Bedienungseinheit (122), die eine Anweisung gibt, ein Bild aufzunehmen, wobei
der Detektor (111) für räumliche Frequenz eine Bereichsunterteilungsfunktion, in der die Bilddaten in mehrere kleine Bereiche für die Detektion der räumlichen Frequenz unterteilt werden, und eine Bildschärfedatenerfassungsfunktion, in der eine vorgegebene Frequenzkomponente von jedem der kleinen Bereiche detektiert wird, wobei die Frequenzkomponente einen Bildschärfezustand eines Bildes in jedem der kleinen Bereiche angibt, umfasst; und
die Steuer-/Recheneinheit (120), die anhand der durch die Bildschärfedatenerfassungsfunktion detektierten Frequenzkomponente eine Scharfstellungsposition (x) von jedem der kleinen Bereiche berechnet, anhand der berechneten Scharfstellungsposition in jedem der kleinen Bereiche eine Anzahl von kleinen Bereichen berechnet, die an jeweiligen Scharfstellungspositionen (x) scharfgestellt sind, um eine Verteilungsfunktion (G(x)) der Scharfstellungspositionen (x) zu erhalten, und anhand der Verteilungsfunktion (G(x)) mehrere verschiedene Scharfstellungspositionen (x) einstellt;
**dadurch gekennzeichnet, dass**:

die Abbildungsvorrichtung als Reaktion auf die Anweisung von der Bedienungseinheit, ein Bild aufzunehmen, eine Reihe von Bildern an den durch die Steuer-/Recheneinheit (120) anhand der durch den Detektor (111) für räumliche Frequenz detektierten Informationen eingestellten mehreren verschiedenen Scharfstellungspositionen (x) aufnimmt; und
die Steuer-/Recheneinheit (120) die Verteilungsfunktion (G(x)) mit einem Schwellenwert (g) vergleicht und den Schwellenwert (g) anhand eines Ergebnisses des Vergleichs ändert, um die mehreren verschiedenen Scharfstellungspositionen (x) anhand eines Ergebnisses eines Vergleichs zwischen der Verteilungsfunktion (G(x)) und dem geänderten Schwellenwert (g) einzustellen.

2. Abbildungsvorrichtung nach Anspruch 1, wobei
die Steuer-/Recheneinheit (120) die Verteilungsfunktion (G(x)) mit einem Schwellenwert (g) vergleicht, um die mehreren verschiedenen Scharfstellungspositionen (x) anhand eines Ergebnisses des Vergleichs einzustellen.

3. Abbildungsvorrichtung nach Anspruch 1 oder 2, wobei
die Steuer-/Recheneinheit (120) Scharfstellungspositionen (x) auf der Verteilungsfunktion (G(x)), die größer als der Schwellenwert (g) sind, als die mehreren verschiedenen einzustellenden Scharfstellungspositionen auswählt.

4. Abbildungsvorrichtung nach einem der Ansprüche 1 bis 3, wobei
der Schwellenwert (g) so eingestellt wird, dass auf eine Scharfstellungsposition in einem näheren Abstand ein kleinerer Schwellenwert eingestellt wird.

5. Abbildungsvorrichtung nach einem der Ansprüche 1, wobei
die Steuer-/Recheneinheit (120) als Reaktion auf die Anweisung von der Bedienungseinheit (122), ein Bild aufzunehmen, eine Verarbeitung ausführt, um eine Anzahl der Reihe von aufzunehmenden Bildern auf eine vorgegebene Anzahl einzustellen.

6. Abbildungsvorrichtung nach Anspruch 5, wobei
der Schwellenwert (g) so eingestellt wird, dass er eine Funktion (F(x)) ist, die eine Summe einer Funktion (f(x)) der Scharfstellungspositionen (x) und eines konstanten Ausdrucks ($\alpha$) ist; und
die Steuer-/Recheneinheit (120) als Reaktion auf die Anweisung von der Bedienungseinheit (122), ein Bild aufzunehmen, die Anzahl einer Reihe von aufzunehmenden Bildern durch Anpassen des konstanten Ausdrucks ($\alpha$) auf die vorgegebene Anzahl einstellt.

7. Abbildungsvorrichtung nach Anspruch 6, wobei:

die Steuer-/Recheneinheit (120) eine Anzahl von Zeitpunkten, zu denen der konstante Ausdruck ($\alpha$) angepasst wird, auf eine vorgegebene Anzahl von Zeitpunkten (N) einstellt, den konstanten Ausdruck ($\alpha$) so bestimmt, dass er entweder ein konstanter Ausdruck ($\alpha$) ist, der am Ende der Anpassung eingestellt ist, oder ein konstanter Ausdruck ($\alpha$) ist, der einer vor jenem ist, der am Ende der Anpassung eingestellt ist, so dass die Anzahl der Reihe von aufzunehmenden Bildern größer als die vorgegebene Anzahl ist, und vorzugsweise bestimmt, dass die vorgegebene Anzahl von Scharfstellungspositionen (x) in einem nahen Abstand von den Scharfstellungspositionen (x) auf der Verteilungsfunktion (G(x)), die größer als der Schwellenwert (g) sind, Linsenpositionen sind.

8. Abbildungsvorrichtung nach Anspruch 7, wobei
die Steuer-/Recheneinheit (120) die Anpassung des konstanten Ausdrucks ($\alpha$) bei Detektion eines Umkehrens des Anstiegs/Rückgangs in dem konstanten Ausdruck ($\alpha$) beendet und bestimmt, dass der konstante Ausdruck ($\alpha$) entweder der konstante Ausdruck ($\alpha$) ist, der am Ende der Anpassung eingestellt ist, oder der konstante Ausdruck ($\alpha$) ist, der jener vor dem Ende des Anpassens ist, so dass die Anzahl der Reihe von aufzunehmenden Bildern größer als die vorgegebene Anzahl ist, und vorzugsweise bestimmt, dass die vorgegebene Anzahl von Scharfstellungspositionen (x) in einem nahen Abstand Linsenpositionen für die Aufnahme sind.

9. Abbildungsvorrichtung nach einem der Ansprüche 3 bis 8, wobei:

die Steuer-/Recheneinheit (120) eine erste Bildschärfe-Belichtungsreihe ausführt, die eine Bildschärfe-Belichtungsreihe in einem schmalen Bildschärfebereich ist, wenn eine Brennweite (f) des optischen Systems (101) gleich einem vorgegebenen Wert ($f_0$) oder größer als dieser ist und eine vorgegebene Anzahl oder mehr von Scharfstellungspositionen (x) in einem näheren Abstand als eine vorgegebene Position von einem Ergebnis des Vergleichs zwischen der Verteilungsfunktion (G(x)) und einem ersten Schwellenwert (J) gefunden werden; und
die Steuer-/Recheneinheit (120) eine zweite Bildschärfe-Belichtungsreihe ausführt, die eine Bildschärfe-Belichtungsreihe in einem großen Bildschärfebereich ist, wenn die Brennweite (f) des optischen Systems (101) kleiner als der vorgegebene Wert ($f_0$) ist oder eine vorgegebene Anzahl oder mehr von Scharfstellungspositionen (x) nicht in einem näheren Abstand als die vorgegebene Position von dem Ergebnis des Vergleichs gefunden werden.

10. Abbildungsvorrichtung nach Anspruch 9, wobei:

die erste Bildschärfe-Belichtungsreihe dazu dient, eine Scharfstellungsposition (x) auf der Verteilungsfunktion (G(x)), die größer als der erste Schwellenwert (J) und an einem Spitzenwert der Verteilung in einem nahen Abstand ist, als auch Scharfstellungspositionen (x), die der auf dem Ergebnis des Vergleichs zwischen der Verteilungsfunktion (G(x)) und dem ersten Schwellenwert (J) beruhenden Scharfstellungsposition vorausgehen oder auf sie folgen, auszuwählen und eine Reihe von Bildern an den ausgewählten Scharfstellungspositionen (x) aufzunehmen; und
die zweite Bildschärfe-Belichtungsreihe dazu dient, mehrere verschiedene Scharfstellungspositionen auf der Verteilungsfunktion (G(x)) auszuwählen, die größer als ein zweiter auf einem Ergebnis des Vergleichs zwischen der Verteilungsfunktion (G(x)) und dem zweiten Schwellenwert (g) beruhenden Schwellenwert (g) sind, und eine Reihe von Bildern an den ausgewählten verschiedenen Scharfstellungspositionen aufzunehmen.

11. Abbildungsvorrichtung nach Anspruch 9, wobei:

die erste Bildschärfe-Belichtungsreihe dazu dient, Frequenzkomponenten von allen oder einigen der kleine Bereiche zu integrieren, eine Scharfstellungsposition anhand der integrierten Frequenzkomponenten zu bestimmen und eine Reihe von Bildern an den bestimmten Scharfstellungspositionen (x) und Scharfstellungspositionen (x), die der bestimmten Scharfstellungsposition vorausgehen oder auf sie folgen, aufzunehmen; und die zweite Bildschärfe-Belichtungsreihe dazu dient, mehrere verschiedene Scharfstellungspositionen auf der Verteilungsfunktion (G(x)) auszuwählen, die größer als ein zweiter auf einem Ergebnis des Vergleichs zwischen der Verteilungsfunktion (G(x)) und dem zweiten Schwellenwert (g) beruhenden Schwellenwert (g) sind, und eine Reihe von Bildern an den ausgewählten verschiedenen Scharfstellungspositionen (x) aufzunehmen.

**12.** Abbildungsvorrichtung nach Anspruch 11, wobei:

der zweite Schwellenwert (g) so eingestellt wird, dass er eine Funktion (F(x)) ist, die eine Summe einer Funktion (f(x)) der Scharfstellungspositionen (x) und eines konstanten Ausdrucks ($\alpha$) ist; und die Steuer-/Recheneinheit (120) als Reaktion auf die Anweisung von der Bedienungseinheit (122), ein Bild aufzunehmen, die Anzahl der Reihe der aufzunehmenden Bilder durch Anpassen des konstanten Ausdrucks ($\alpha$) auf die vorgegebene Anzahl einstellt.

**13.** Abbildungsverfahren, das eine Abbildungsvorrichtung verwendet, die umfasst: ein optisches System zum Abbilden (101); einen Bildsensor (104a), der ein durch das optische System (101) erzeugtes optisches Bild eines Gegenstands in ein elektrisches Signal für die Ausgabe als Bilddaten umsetzt; einen Bildprozessor (110), der die Bilddatenausgabe von dem Bildsensor (104a) verarbeitet und einen Detektor (111) für räumliche Frequenz umfasst, der eine räumliche Frequenz der Bilddaten detektiert; eine Antriebsvorrichtung für das optische System (111), die eine Scharfstellungsposition (x) des optischen Systems (101) einstellt; und eine Steuer-/Recheneinheit (120), die die Antriebsvorrichtung des optischen Systems (111) gemäß den durch den Detektor (111) für räumliche Frequenz detektierten Informationen steuert; und eine Bedienungseinheit (122), die eine Anweisung gibt, ein Bild aufzunehmen, wobei das Verfahren die Schritte umfasst:

Aufteilen der Bilddaten in mehrere kleine Bereiche für die Detektion der räumlichen Frequenz; Detektieren einer vorgegebenen Frequenzkomponente, die einen Bildschärfezustand eines Bildes angibt, von jedem der kleinen Bereiche; Berechnen anhand der detektierten Frequenzkomponente einer Scharfstellungsposition (x) von jedem der kleinen Bereiche; Erhalten einer Verteilungsfunktion (G(x)) der Scharfstellungspositionen (x) anhand der berechneten Scharfstellungsposition von jedem der kleinen Bereiche durch Berechnen einer Anzahl von kleinen Bereichen, die an jeweiligen Scharfstellungspositionen (x) scharfgestellt sind; und Einstellen der mehreren verschiedenen Scharfstellungspositionen (x) anhand der Verteilungsfunktion (G(x)); **dadurch gekennzeichnet, dass** das Verfahren die Schritte umfasst:

Vergleichen der Verteilungsfunktion (G(x)) mit einem Schwellenwert (g); und Ändern des Schwellenwerts (g) anhand eines Ergebnisses des Vergleichs, um die Scharfstellungspositionen (x) anhand eines Ergebnisses eines Vergleichs zwischen der Verteilungsfunktion (G(x)) und dem geänderten Schwellenwert (g) einzustellen.

## Revendications

**1.** Dispositif de formation d'image comprenant :

un système optique pour former image (101) ; un capteur d'image (104a) qui convertit une image optique d'un sujet formée par le système optique (101) en un signal électrique pour une sortie en tant que données d'image ; un processeur d'image (110) qui traite les données d'image délivrées par le capteur d'image (104a) et qui comprend un détecteur de fréquence spatiale (111) qui détecte une fréquence spatiale des données d'image ; un dispositif de commande de système optique (105) qui établit une position de mise au point (x) du système optique (101) ; et une unité de commande/arithmétique (120) qui commande le dispositif de commande de système optique (105) conformément aux informations détectées par le détecteur de fréquence spatiale (111) ; et une unité de fonctionnement (122) qui donne une instruction pour capturer une image, dans lequel le détecteur de fréquence spatiale (111) comprend une fonction de division en zones dans laquelle les données d'image sont divisées en une pluralité de petites zones pour la détection de la fréquence spatiale, et une fonction d'acquisition de données de mise au point dans laquelle une composante de fréquence prédéterminée est détectée à partir de chacune des petites zones, la composante de fréquence indiquant un état de netteté d'une image dans chacune des petites zones ; et

l'unité de commande/arithmétique (120) calcule une position de mise au point (x) de chacune des petites zones sur la base de la composante de fréquence détectée par la fonction d'acquisition de données de mise au point, calcule, sur la base de la position de mise au point calculée dans chacune des petites zones, un nombre de petites zones qui sont nettes à des positions de mise au point (x) respectives pour obtenir une fonction de distribution (G(x)) des positions de mise au point (x), et établit une pluralité de positions de mise au point (x) différentes sur la base de la fonction de distribution (G(x)) ;

**caractérisé en ce que** :

le dispositif de formation d'image capture une série d'images au niveau de la pluralité de positions de mise au point (x) différentes établies par l'unité de commande/arithmétique (120) sur la base des informations détectées par le détecteur de fréquence spatiale (111), en réponse à l'instruction de capture d'une image provenant de l'unité de fonctionnement ; et

l'unité de commande/arithmétique (120) compare la fonction de distribution (G(x)) avec un seuil (g) et modifie le seuil (g) sur la base d'un résultat de la comparaison pour établir la pluralité de positions de mise au point (x) différentes sur la base d'un résultat d'une comparaison entre la fonction de distribution (G(x)) et le seuil (g) modifié.

2. Dispositif de formation d'image selon la revendication 1, dans lequel
   l'unité de commande/arithmétique (120) compare la fonction de distribution (G(x)) avec un seuil (g) pour établir la pluralité de positions de mise au point (x) différentes sur la base d'un résultat de la comparaison.

3. Dispositif de formation d'image selon la revendication 1 ou 2, dans lequel
   l'unité de commande/arithmétique (120) sélectionne des positions de mise au point (x) sur la fonction de distribution (G(x)) qui sont supérieures au seuil (g) en tant que pluralité de positions de mise au point différentes à établir.

4. Dispositif de formation d'image selon l'une quelconque des revendications 1 à 3, dans lequel
   le seuil (g) est établi de sorte qu'un plus petit seuil soit établi à une position de mise au point à une distance plus proche.

5. Dispositif de formation d'image selon l'une des revendications 1 à 4, dans lequel
   l'unité de commande/arithmétique (120) exécute un traitement pour établir, à un nombre prédéterminé, un nombre de la série d'images à capturer en réponse à l'instruction de capture d'une image provenant de l'unité de fonctionnement (122).

6. Dispositif de formation d'image selon la revendication 5, dans lequel :

   le seuil (g) est établi de manière à être une fonction (F(x)) qui est une somme d'une fonction (f(x)) des positions de mise au point (x) et d'un terme constant ($\alpha$) ; et
   l'unité de commande/arithmétique (120) établit, au nombre prédéterminé, le nombre d'une série d'images à capturer en réponse à l'instruction de capture d'une image provenant de l'unité de fonctionnement (122), en ajustant le terme constant ($\alpha$).

7. Dispositif de formation d'image selon la revendication 6, dans lequel :

   l'unité de commande/arithmétique (120) établit un nombre de fois auquel le terme constant ($\alpha$) est ajusté à un nombre prédéterminé de fois (N), détermine le terme constant ($\alpha$) pour qu'il soit, soit un terme constant ($\alpha$) établi à la fin de l'ajustement, soit un terme constant ($\alpha$) un avant celui établi à la fin de l'ajustement de sorte que le nombre de la série d'images à capturer soit supérieur au nombre prédéterminé, et détermine de préférence, pour qu'elles soient des positions de lentille pour une prise de vue, le nombre prédéterminé de positions de mise au point (x) à une distance proche par rapport aux positions de mise au point (x) sur la fonction de distribution (G(x)) qui sont supérieures au seuil (g).

8. Dispositif de formation d'image selon la revendication 7, dans lequel
   l'unité de commande/arithmétique (120) termine l'ajustement du terme constant ($\alpha$) lors de la détection d'une inversion d'augmentation/diminution du terme constant ($\alpha$), et détermine le terme constant ($\alpha$) pour qu'il soit, soit le

terme constant ($\alpha$) établi à la fin de l'ajustement, soit le terme constant ($\alpha$) un avant la fin de l'ajustement de sorte que le nombre de la série d'images à capturer soit supérieur au nombre prédéterminé, et détermine de préférence, pour qu'elles soient des positions de lentille pour une prise de vue, le nombre prédéterminé de positions de mise au point (x) à une distance proche.

9. Dispositif de formation d'image selon l'une des revendications 3 à 8, dans lequel :

lorsqu'une longueur focale (f) du système optique (101) est égale ou supérieure à une valeur prédéterminée ($f_0$) et qu'un numéro prédéterminé ou plus de positions de mise au point (x) sont trouvées à une distance plus proche qu'une position prédéterminée à partir d'un résultat de comparaison entre la fonction de distribution (G(x)) et un premier seuil (J), l'unité de commande/arithmétique (120) effectue un premier cadrage de mise au point qui est un cadrage de mise au point dans une plage de mise au point étroite ; et
lorsque la longueur focale (f) du système optique (101) est inférieure à une valeur prédéterminée ($f_0$) ou qu'un nombre prédéterminé ou plus de positions de mise au point (x) ne sont pas trouvées à une distance plus proche que la position prédéterminée à partir du résultat de la comparaison, l'unité de commande/arithmétique (120) effectue un deuxième cadrage de mise au point qui est un cadrage de mise au point dans une large plage de mise au point.

10. Dispositif de formation d'image selon la revendication 9, dans lequel :

le premier cadrage de mise au point sert à sélectionner une position de mise au point (x) sur la fonction de distribution (G(x)) qui est supérieure au premier seuil (J) et au niveau d'un pic de la distribution à une distance proche ainsi que les positions de mise au point (x) précédant et suivant la position de mise au point sur la base du résultat de la comparaison entre la fonction de distribution (G(x)) et le premier seuil (J) et à capturer une série d'images aux positions de mise au point (x) sélectionnées ; et
le deuxième cadrage de mise au point sert à sélectionner une pluralité de positions de mise au point différentes sur la fonction de distribution (G(x)) qui sont supérieures à un deuxième seuil (g) sur la base d'un résultat de la comparaison entre la fonction de distribution (G(x)) et le deuxième seuil (g) et à capturer une série d'images aux positions de mise au point différentes sélectionnées.

11. Dispositif de formation d'image selon la revendication 9, dans lequel :

le premier cadrage de mise au point sert à intégrer les composantes de fréquence de la totalité ou de certaines des petites zones, déterminer une position de mise au point sur la base des composantes de fréquence intégrées, et capturer une série d'images à la position de mise au point (x) déterminée et aux positions de mise au point (x) précédant et suivant la position de mise au point (x) déterminée ; et
le deuxième cadrage de mise au point sert à sélectionner une pluralité de positions de mise au point différentes sur la fonction de distribution (G(x)) qui sont supérieures à un deuxième seuil (g) sur la base d'un résultat de la comparaison entre la fonction de distribution (G(x)) et le deuxième seuil (g) et à capturer une série d'images aux positions de mise au point (x) différentes sélectionnées.

12. Dispositif de formation d'image selon la revendication 11, dans lequel :

le deuxième seuil (g) est établi de manière à être une fonction (F(x)) qui est une somme d'une fonction (f(x)) des positions de mise au point (x) et d'un terme constant ($\alpha$) ; et
l'unité de commande/arithmétique (120) établit, au nombre prédéterminé, le nombre de la série d'images à capturer en réponse à l'instruction de capture d'une image provenant de l'unité de fonctionnement (122), en ajustant le terme constant ($\alpha$).

13. Procédé de formation d'image en utilisant un dispositif de formation d'image qui comprend un système optique pour former une image (101) ; un capteur d'image (104a) qui convertit une image optique d'un sujet formée par le système optique (101) en un signal électrique pour une sortie en tant que données d'image ; un processeur d'image (110) qui traite les données d'image délivrées par le capteur d'image (104a) et qui comprend un détecteur de fréquence spatiale (111) qui détecte une fréquence spatiale des données d'image ; un dispositif de commande de système optique (111) qui établit une position de mise au point (x) du système optique (101) ; et une unité de commande/arithmétique (120) qui commande le dispositif de commande de système optique (111) conformément aux informations détectées par le détecteur de fréquence spatiale (111) ; et une unité de fonctionnement (122) qui donne une instruction pour capturer une image, le procédé comprenant les étapes :

de division des données d'image en une pluralité de petites zones pour la détection de la fréquence spatiale ;

de détection d'une composante de fréquence prédéterminée indiquant un état de netteté d'une image à partir de chacune des petites zones ;

de calcul d'une position de mise au point (x) de chacune des petites zones sur la base de la composante de fréquence détectée ;

d'obtention d'une fonction de distribution (G(x)) des positions de mise au point (x) en calculant un nombre de petites zones qui sont nettes à des positions de mise au point (x) respectives sur la base de la position de mise au point calculée de chacune des petites zones ; et

d'établissement de la pluralité de positions de mise au point (x) différentes sur la base de la fonction de distribution (G(x)) ;

**caractérisé en ce que** le procédé comprend les étapes :

de comparaison de la fonction de distribution (G(x)) avec un seuil (g) ; et

de modification du seuil (g) sur la base d'un résultat de la comparaison pour établir les positions de mise au point (x) sur la base d'un résultat d'une comparaison entre la fonction de distribution (G(x)) et le seuil (g) modifié.

# FIG. 1

# FIG. 2

START —SA201

SHUTTER HALF-PRESSED? SA202 — NO

YES

HILL CLIMB FOCUSING —SA203

CALCULATE IN-FOCUS POSITION IN EACH SMALL AREA —SA204

GENERATE DISTRIBUTION FUNCTION G(X) OF IN-FOCUS POSITIONS —SA205

$G(x) > g$ ? SA206 — NO

YES

ADJUST THRESHOLD FUNCTION F(X) —SA207

DETERMINE LENS POSITION FOR FOCUS BRACKETING —SA208

HALF-PRESS TO SHUTTER HELD? SA209 — NO

YES

SHUTTER FULLY PRESSED? SA210 — NO

YES

CAPTURE IMAGES AT 5 IN-FOCUS POSITIONS —SA211

END —SA212

# FIG. 3

SMALL AREA
(1, 1)

SMALL AREA
(1, 12)

SMALL AREA
(12, 1)

SMALL AREA
(12, 12)

# FIG. 4

# FIG. 5

# FIG. 6

F(x) = f(x) + α :THRESHOLD FUNCTION

G(x):IN-FOCUS POSITION DISTRIBUTION

inf    x15 x14 x13 x12 x11 x10 x9   x8   x7   x6   x5   x4   x3   x2   x1   x0    near

# FIG. 7

START —SA221

SA222

$G(x) > F(x)$
$X = 5$ ?

NO

YES

SA223

$G(x) > F(x)$
$X = 6$ ?

NO

YES

SA224 —  $\alpha i = \alpha i - 1 + \triangle \alpha$

SA225

$\alpha i = \alpha i - 1 - \triangle \alpha$

END —SA226

# FIG. 8

F(x) = f(x) + α 1:THRESHOLD FUNCTION

G(x):IN-FOCUS POSITION DISTRIBUTION

inf

x15 x14 x13 x12 x11 x10 x9 x8 x7 x6 x5 x4 x3 x2 x1 x0

near

F(x) = f(x) + α 2:THRESHOLD FUNCTION

G(x):IN-FOCUS POSITION DISTRIBUTION

inf

x15 x14 x13 x12 x11 x10 x9 x8 x7 x6 x5 x4 x3 x2 x1 x0

near

# FIG. 9

START —SA231

SA232
G(x) > F(x)
X = 5 ?    NO

YES

SA233
NEGATIVE RESULT
OBTAINED AT N-TH TIME
IN SA232 ?    NO

YES

SA234
G(x) > F(x)
X = 6 OR MORE ?    NO

YES

SA235 — $\alpha i = \alpha i - 1 + \triangle \alpha$

SA236
$\alpha i = \alpha i - 1 - \triangle \alpha$

END —SA237

# FIG. 10

START —SA241

SA242
G(x) > F(x)
X = 5 ?    NO

YES

SA243
$k i \times k i - 1 = -1$ ?    NO

YES

SA244
G(x) > F(x)
X = 6 OR MORE ?    NO

YES

SA245 — $\alpha i = \alpha i - 1 + \triangle \alpha$

SA247
$\alpha i = \alpha i - 1 - \triangle \alpha$

SA246 — SET KI = 1

SA248
SET KI = -1

END —SA249

# FIG. 11

START — SB201

SHUTTER HALF-PRESSED? — SB202

NO

YES

HILL CLIMB FOCUSING — SB203

CALCULATE IN-FOCUS POSITION IN EACH SMALL AREA — SB204

GENERATE DISTRIBUTION FUNCTION G(X) OF IN-FOCUS POSITIONS — SB205

DETERMINE TYPE OF FOCUS BRACKETING — SB206

DETERMINE LENS POSITION FOR FOCUS BRACKETING — SB207

HALF-PRESS TO SHUTTER HELD? — SB208

NO

YES

SHUTTER FULLY PRESSED? — SB209

NO

YES

CAPTURE IMAGES IN FOCUS BRACKETING — SB210

END — SB211

# FIG. 12

# FIG. 13

G(x):IN-FOCUS POSITION DISTRIBUTION

J:THRESHOLD

inf

near

x15 x14 x13 x12 x11 x10 x9 x8 x7 x6 x5 x4 x3 x2 x1 x0

# FIG. 14

START — SB221

FOCAL LENGTH F ≥ $F_0$ mm? — SB222
→ NO

YES

ANY IN-FOCUS POSITION BEING $G(X) \geq J$ IN NEARER DISTANCE? — SB223
→ NO

YES

SB224 — FIRST FOCUS BRACKETING

SECOND FOCUS BRACKETING — SB225

SB226 — END

# FIG. 15

START — SB231

FIND PEAK OF IN-FOCUS DISTRIBUTION — SB232

DETERMINE LENS POSITION FOR FOCUS BRACKETING — SB233

END — SB234

# FIG. 16

START ⟩—SB241

↓

COMPARE DISTRIBUTION
FUNCTION G(X) AND
THRESHOLD FUNCTION F(X) ⟩—SB242

↓

DETERMINE LENS POSITION
FOR FOCUS BRACKETING ⟩—SB243

↓

END ⟩—SB244

# FIG. 17

START ⟩—SB251

↓

INTEGRATE
FREQUENCY DATA ⟩—SB252

↓

FIND PEAK OF
FREQUENCY DATA ⟩—SB253

↓

DETERMINE LENS POSITION
FOR FOCUS BRACKETING ⟩—SB254

↓

END ⟩—SB255

# FIG. 18

INTEGRATED FREQUENCY DATA

inf

near

x15 x14 x13 x12 x11 x10 x9 x8 x7 x6 x5 x4 x3 x2 x1 x0

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI07318785 B
- JP 2002277725 A

- US 20060061678 A1